# EUROPEAN PATENT SPECIFICATION

(11) **EP 1 570 012 B1**
(45) Date of publication and mention of the grant of the patent: **01.10.2008**
(21) Application number: 03813474.8
(22) Date of filing: 12.12.2003
(51) Int. Cl.: C09D 133/08, C09D 167/00, C09D 133/00

(54) **COATING COMPOSITION CONTAINING ACID FUNCTIONAL ACRYLIC COPOLYMER AND SILICA**
BESCHICHTUNGSZUSAMMENSETZUNG ENTHALTEND SÄUREFUNKTIONELLE ACRYLPOLYMERE UND SILICA
COMPOSITION DE REVETEMENT CONTENANT UN COPOLYMERE ACRYLIQUE FONCTIONNEL ACIDE MODIFIE ET DE LA SILICE

(30) Priority: 13.12.2002 US 433163 P
(43) Date of publication of application: 07.09.2005
(73) Proprietor: E.I. DU PONT DE NEMOURS AND COMPANY, Wilmington, DE 19898 (US)
(72) Inventor: MA, Sheau-Hwa, West Chester, PA 19382 (US); MATTHEWS, James, F., Berwyn, PA 19312 (US); TRONCO, Henry, A., Jr., Springfield, PA 19064 (US)
(74) Representative: Morf, Jan Stefan
(86) International application number: PCT/US2003/040324
(87) International publication number: WO 2004/055124

(56) References cited:
- WO-A-98/55328
- WO-A-03/078513
- US-A- 3 845 066
- US-A- 4 524 173
- US-A- 5 059 264

## Description

### Field of the Invention

The present invention relates to curable compositions and more particularly relates to low VOC (volatile organic component) ambient temperature curable coating compositions suitable for use in automotive OEM (original equipment manufacturer) and refinish applications.

### Description of Related Art

A number of clear and pigmented coating compositions are utilized in various coatings, such as, for example, primer coats, basecoats and clearcoats used in automotive coatings, which are generally solvent based.

Multi-coat systems were developed to satisfy a need for improved aesthetics of the coated substrate. A multi-coat systems typically include a primer coat, followed by a basecoat, which is typically pigmented and then finally a clearcoat that imparts a glossy appearance of depth that has commonly been called "the wet look".

In a multi-coat system it is necessary that a basecoat have "strike-in" resistance. By "strike-in" resistance is meant the ability of a basecoat layer of a pigmented coating composition to resist attack by the solvents in a layer of a clear coating composition applied over the basecoat layer thereby preventing any change in the color of a pigmented basecoat. The strike-in is a problem because the automobile manufacturers generally wish to apply the clear coating composition by a "wet-on-wet" technique. By this is meant that a basecoat layer of a pigmented composition is applied to a substrate. Then after flashing the basecoat layer a topcoat layer of a clear composition is applied followed by a single curing step utilized to cure the multi-layer system. The "striking in" of the topcoat layer into the basecoat layer is particularly undesirable since it adversely affects alignment, i.e., flop, of metallic pigments that are typically present in a basecoat layer. By "flop" is meant the visual change in brightness or lightness of the metallic aluminum flake with a change in viewing angle, that is, a change of from 90 to 180 degrees. The greater the visual change from light to dark appearance, the better the flop. The flop accentuates the lines and curves of an automobile; therefore, it is very important in achieving the sought after appearance of the coating. Therefore, in order to prevent or substantially reduce the strike-in rheology control agent has been used.

Another problem associated with a basecoat containing metallic pigments whether applied as a single coat or part of multi-coat system is the presence of mottled appearance, which results from lack control over flake orientation.

However, one of the problems associated with conventional methods, such as those disclosed in US 5,506,325 attempts to improve rheology control to alleviate sag problems that adversely affect the flop of metallic paints. The invention discloses the use of non-gelled copolymer mixed with silica. However, a need still exists to improve the strike-in resistance along the improved coating composition properties, such as lowered VOC and reduced cure time.

### STATEMENT OF THE INVENTION

The present invention is directed to a coating composition comprising:
a crosslinkable component comprising an acid functional acrylic copolymer polymerized from a monomer mixture comprising 2 percent to 12 percent of one or more carboxylic acid group containing monomers, percentages based on total weight of the acid functional acrylic copolymer, and 0.2 percent to 2 percent of amorphous silica, percentages based on total weight of the crosslinkable component; and
a crosslinking component.

### DETAILED DESCRIPTION OF THE INVENTION

As used herein:
"Two-pack coating composition" means a thermoset coating composition having two components stored in separate containers. The containers containing the two components are typically sealed to increase their shelf life. The components are mixed just prior to use to form a pot mix, which has a limited pot life, typically ranging from a few minutes (15 minutes to 45 minutes) to a few hours (4 hours to 8 hours). The pot mix is applied as a layer of a desired thickness on a substrate surface, such as an auto body. After application, the layer dries and cures at ambient or elevated temperatures to form a coating on the substrate surface having desired coating properties, such as, high gloss, mar-resistance and resistance to environmental etching.
"Low VOC coating composition" means a coating composition that includes the range of from 0.1 kilograms (1.0 pounds per gallon) to 0.72 kilograms (6.0 pounds per gallon), preferably 0.3 kilograms (2.6 pounds per gallon) to 0.6 kilograms (5.0 pounds per gallon) and more preferably 0.34 kilograms (2.8 pounds per gallon) to 0.53 kilograms (4.4 pounds per gallon) of the solvent per liter of the coating composition. All VOC's determined under the procedure provided in ASTM D3960.
"High solids composition" means a coating composition having solid component of above 30 percent, preferably in the range of from 35 to 90 percent and more preferably in the range of from 40 to 80 percent, all in weight percentages based on the total weight of the composition.
"GPC weight average molecular weight" means a weight average molecular weight measured by utilizing gel permeation chromatography. A high performance liquid chromatograph (HPLC) supplied by Hewlett-Packard, Palo Alto, California was used. Unless stated otherwise, the liquid phase used was tetrahydrofuran and the standard was polymethyl methacrylate or polystyrene.
"Tg" (glass transition temperature) measured in °C determined by DSC (Differential Scanning Calorimetry).
"Polydispersity" means GPC weight average molecular weight divided by GPC number average molecular weight. The lower the polydispersity (closer to 1), the narrower will be the molecular weight distribution, which is desired.
"(Meth)acrylate" means acrylate and methacrylate.
"Polymer solids" means a polymer in its dry state.
"Crosslinkable component" means a component that includes a compound, polymer or copolymer having functional groups positioned in the backbone of the polymer, pendant from the backbone of the polymer, terminally positioned on the backbone of the polymer, or a combination thereof.
"Crosslinking component" is a component that includes a compound, polymer or copolymer having groups positioned in the backbone of the polymer, pendant from the backbone of the polymer, terminally positioned on the backbone of the polymer, or a combination thereof, wherein these groups are capable of crosslinking with the functional groups on the crosslinkable component (during the curing step) to produce a coating in the form of crosslinked structures.

In coating application, especially the automotive refinish or OEM application, a key driver is productivity, i.e., the ability of a layer of a coating composition to dry rapidly to a strike-in resistant state such that a subsequently coated layer, such as a layer form clear coating composition does not adversely affect the underlying layer. Once the top layer is applied, the multi-coat system should then cure sufficiently rapidly without adversely affecting uniformity of color and appearance. The present invention addresses the forgoing issues by utilizing a unique crosslinking technology and an additive. Thus, the present coating composition includes a crosslinkable and crosslinking component.

The crosslinkable component includes 2 weight percent to 25 weight percent, preferably 3 weight percent to 20 weight percent, more preferably 5 weight percent to 15 weight percent of one or more acid functional acrylic copolymers, all percentages being based on the total weight of the crosslinkable component. If the composition contains excess of the upper limit of the acid functional acrylic copolymer, the resulting composition tends to have higher than required application viscosity. If the composition contains less than the lower limit of the acid functional copolymer, the resultant coating would have insignificant strike-in properties for a multi-coat system or flake orientation control in general.

The crosslinkable component includes an acid functional acrylic copolymer polymerized from a monomer mixture that includes 2 weight percent to 12 weight percent, preferably 3 weight percent to 10 weight percent, more preferably 4 weight percent to 6 weight percent of one or more carboxylic acid group containing monomers, all percentages being based on the total weight of the acid functional acrylic copolymer. If the amount of the carboxylic acid group containing monomer in the monomer mixture exceeds the upper limit, the coatings resulting from such a coating composition would have unacceptable water sensitivity and if the amount is less than the lower limit, the resultant coating would have insignificant strike-in properties for a multi-coat system or flake orientation control in general.

The acid functional acrylic copolymer preferably has a GPC weight average molecular weight ranging from 8,000 to 100,000, preferably from 10,000 to 50,000 and more preferably from 12,000 to 30,000. The copolymer preferably has a polydispersity ranging from 1.05 to 10.0, preferably ranging from 1.2 to 8 and more preferably ranging from 1.5 to 5. The copolymer preferably has a Tg of ranging from about -5°C to + 100°C, preferably from about 0°C to 80°C and more preferably from about 10°C to 60°C.

The carboxylic acid group containing monomers suitable for use in the present invention include (meth)acrylic acid, crotonic acid, oleic acid, cinnamic acid, glutaconic acid, muconic acid, undecylenic acid, itaconic acid, crotonic acid, fumaric acid, maleic acid, or a combination thereof. (Meth)acrylic acid preferred. It is understood that applicants also contemplate providing the acid functional acrylic copolymer with carboxylic acid groups by producing a copolymer polymerized from a monomer mixture that includes anhydrides of the aforementioned carboxylic acids and then hydrolyzing such copolymers to provide the resulting copolymer with carboxylic acid groups. Maleic and itaconic anhydrides are preferred. Applicants further contemplate hydrolyzing such anhydrides in them monomer mixture before the polymerization of the monomer mixture into the acid functional acrylic copolymer.

It is believed, without reliance thereon, that the presence of carboxylic acid groups in the copolymer of the present invention appears to increase viscosity of the resulting coating composition due to physical network formed by the well-known hydrogen bonding of carboxyl groups. As a result, such increased viscosity, assists in strike-in properties in multi-coat systems and flake orientation control in general.

The monomer mixture suitable for use in the present invention includes 5 percent to 40 percent, preferably 10 percent to 30 percent, all based on total weight of the acid functional acrylic copolymer of one or more functional (meth)acrylate monomers. It should be noted that if the amount of the functional (meth)acrylate monomers in the monomer mixture exceeds the upper limit, the pot life of the resulting coating composition is reduced and if less than the lower limit is used, it adversely affects the resulting coating properties, such as durability. The functional (meth)acrylate monomer is provided with one or more crosslinkable groups selected from a primary hydroxyl, secondary hydroxyl, or a combination thereof.

Some of suitable hydroxyl containing (meth)acrylate monomers have the following structure: 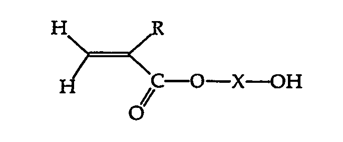 wherein R is H or methyl and X is a divalent moiety, which can be substituted or unsubstituted C₁ to C₁₈ linear aliphatic moiety, or substituted or unsubstituted C₃ to C₁₈ branched or cyclic aliphatic moiety. Some of the suitable substituents include nitrile, amide, halide, such as chloride, bromide, fluoride, acetyl, aceotoacetyl, hydroxyl, benzyl and aryl. Some specific hydroxyl containing (meth)acrylate monomers in the monomer mixture include 2-hydroxyethyl (meth)acrylate, 2-hydroxypropyl (meth)acrylate, 3-hydroxypropyl (meth)acrylate, and 4-hydroxybutyl (meth)acrylate.

The monomer mixture can also include one or more non-functional (meth)acrylate monomers. As used here, non-functional groups are those that do not crosslink with a crosslinking component. Some of suitable non-functional C₁ to C₂₀ alkyl (meth)acrylates include methyl (meth)acrylate, ethyl (meth)acrylate, propyl (meth)acrylate, butyl (meth)acrylate, pentyl (meth)acrylate, hexyl (meth)acrylate, octyl (meth)acrylate, nonyl (meth)acrylate, isodecyl (meth)acrylate, and lauryl (meth)acrylate; branched alkyl monomers, such as isobutyl (meth)acrylate, t-butyl (meth)acrylate and 2-ethylhexyl (meth)acrylate; and cyclic alkyl monomers, such as cyclohexyl (meth)acrylate, methylcyclohexyl (meth)acrylate, trimethylcyclohexyl (meth)acrylate, tertiarybutylcyclohexyl (meth)acrylate and isobornyl (meth)acrylate. Isobornyl (meth)acrylate and butyl acrylate are preferred.

The monomer mixture can also include one or more of other monomers for the purpose of achieving the desired properties, such as hardness, appearance and mar resistance. Some of the other such monomers include, for example, styrene, α-methyl styrene, acrylonitrile and methacrylonitrile. When included, preferably, the monomer mixture includes such monomers in the range of 5 percent to 30 percent, all percentages being in weight percent based on the total weight of the polymers solids. Styrene is preferred.

Any conventional bulk or solution polymerization process can be used to produce the acid functional acrylic copolymer of the present invention. One of the suitable processes for producing the copolymer of the present invention includes free radically solution polymerizing the aforedescribed monomer mixture.

The polymerization of the monomer mixture can be initiated by adding conventional thermal initiators, such as azos exemplified by Vazo^{®} 64 supplied by DuPont Company, Wilmington, Delaware; and peroxides, such as t-butyl peroxy acetate. The molecular weight of the resulting copolymer can be controlled by adjusting the reaction temperature, the choice and the amount of the initiator used, as practiced by those skilled in the art.

The crosslinking component of the present invention includes one or more polyisocyanates, melamines, or a combination thereof. Polyisocyanates are preferred.

Typically, the polyisocyanate is provided with in the range of 2 to 10, preferably 2.5 to 8, more preferably 3 to 5 isocyanate functionalities. Generally, the ratio of equivalents of isocyanate functionalities on the polyisocyanate per equivalent of all of the functional groups present in the crosslinking component ranges from 0.5/1 to 3:0/1, preferably from 0.7/1 to 1.8/1, more preferably from 0.8/1 to 1.3/1. Some suitable polyisocyanates include aromatic, aliphatic, or cycloaliphatic polyisocyanates, trifunctional polyisocyanates and isocyanate functional adducts of a polyol and difunctional isocyanates. Some of the particular polyisocyanates include diisocyanates, such as 1,6-hexamethylene diisocyanate, isophorone diisocyanate, 4,4'-biphenylene diisocyanate, toluene diisocyanate, biscyclohexyl diisocyanate, tetramethylene xylene diisocyanate, ethyl ethylene diisocyanate, 1-methyltrimethylene diisocyanate, 1,3-phenylene diisocyanate, 1,5-napthalene diisocyanate, bis-(4-isocyanatocyclohexyl)-methane and 4,4'-diisocyanatodiphenyl ether.

Some of the suitable trifunctional polyisocyanates include triphenylmethane triisocyanate, 1,3,5-benzene triisocyanate, and 2,4,6-toluene triisocyanate. Trimers of diisocyanate, such as the trimer of hexamethylene diisocyanate sold under the trademark Desmodur^{®}N-3390 by Bayer Corporation of Pittsburgh, Pennsylvania and the trimer of isophorone diisocyanate are also suitable. Furthermore, trifunctional adducts of triols and diisocyanates are also suitable. Trimers of diisocyanates are preferred and trimers of isophorone and hexamethylene diisocyanates are more preferred.

Typically, the coating composition can include 0.1 weight percent to 40 weight percent, preferably, 15 weight percent to 35 weight percent, and more preferably 20 weight percent to 30 weight percent of the melamine, wherein the percentages are based on total weight of composition solids.

Some of the suitable melamines include monomeric melamine, polymeric melamine-formaldehyde resin or a combination thereof. The monomeric melamines include low molecular weight melamines which contain, on an average, three or more methylol groups etherized with a C₁ to C₅ monohydric alcohol such as methanol, n-butanol, or isobutanol per triazine nucleus, and have an average degree of condensation up to about 2 and preferably in the range of about 1.1 to about 1.8, and have a proportion of mononuclear species not less than about 50 percent by weight. By contrast the polymeric melamines have an average degree of condensation of more than 1.9. Some such suitable monomeric melamines include alkylated melamines, such as methylated, butylated, isobutylated melamines and mixtures thereof. Many of these suitable monomeric melamines are supplied commercially. For example, Cytec Industries Inc., West Patterson, New Jersey supplies Cymel^{®} 301 (degree of polymerization of 1.5,95% methyl and 5% methylol), Cymel^{®} 350 (degree of polymerization of 1.6,84% methyl and 16% methylol), 303, 325, 327 and 370, which are all monomeric melamines. Suitable polymeric melamines include high amino (partially alkylated, -N, -H) melamine known as Resiinene^{®} BMP5503 (molecular weight 690, polydispersity of 1.98, 56% butyl, 44% amino), which is supplied by Solutia Inc., St. Louis, Missouri, or Cymeel^{®}1158 provided by Cytec Industries Inc., West Patterson, New Jersey. Cytec Industries Inc. also supplies Cymel^{®} 1130 @ 80 percent solids (degree of polymerization of 2.5), Cymel^{®} 1133 (48% methyl, 4 % methylol and 48 % butyl), both of which are polymeric melamines.

If desired, including appropriate catalysts in the crosslinkable component can accelerate the curing process of a potmix of the coating composition.

When the crosslinking component includes polyisocyanate, the crosslinkable component of the coating composition preferably includes a catalytically active amount of one or more catalysts for accelerating the curing process. Generally, catalytically active amount of the catalyst in the coating composition ranges from about 0.001 percent to about 5 percent, preferably ranges from 0.005 percent to 2 percent, more preferably ranges from 0.01 percent to 1 percent, all in weight percent based on the total weight of crosslinkable and crosslinking component solids. A wide variety of catalysts can be used, such as, tin compounds, including dibutyl tin dilaurate and dibutyl tin diacetate; tertiary amines, such as, triethylenediamine. These catalysts can be used alone or in conjunction with carboxylic acids, such as, acetic acid. One of the commercially available catalysts, sold under the trademark, Fastcat^{®} 4202 dibutyl tin dilaurate by Elf-Atochem North America, Inc. Philadelphia, Pennsylvania, is particularly suitable.

When the crosslinking component includes melamine, it also preferably includes a catalytically active amount of one or more acid catalysts to further enhance the crosslinking of the components on curing. Generally, catalytically active amount of the acid catalyst in the coating composition ranges from about 0.1 percent to about 5 percent, preferably ranges from 0.1 percent to 2 percent, more preferably ranges from 0.5 percent to 1.2 percent, all in weight percent based on the total weight of crosslinkable and crosslinking component solids. Some suitable acid catalysts include aromatic sulfonic acids, such as dodecylbenzene sulfonic acid, para- toluenesulfonic acid and dinonylnaphthalene sulfonic acid, all of which are either unblocked or blocked with an amine, such as dimethyl oxazolidine and 2-amino-2-methyl-1-propanol, n,n-dimethylethanolamine or a combination thereof. Other acid catalysts that can be used are strong acids, such as phosphoric acids, more particularly phenyl acid phosphate, which may be unblocked or blocked with an amine.

The crosslinkable component of the coating composition can further include in the range of from 0.1 percent to 95 percent, preferably in the range of from 10 percent to 90 percent, more preferably in the range of from 20 percent to 80 percent and most preferably in the range of 30 percent to 70 percent, all based on the total weight of the crosslinkable component of an acrylic polymer, a polyester or a combination thereof. Applicants have discovered that by adding one or more the foregoing polymers to the crosslinkable component, the coating composition resulting therefrom provides coating with improved sag resistance, and flow and leveling properties.

The acrylic polymer suitable for use in the present invention can have a GPC weight average molecular weight exceeding 2000, preferably in the range of from 3000 to 20,000, and more preferably in the range of 4000 to 10,000. The Tg of the acrylic polymer varies in the range of from 0°C to 100°C, preferably in the range of from 10°C to 80°C.

The acrylic polymer suitable for use in the present invention can be conventionally polymerized from typical monomers, such as alkyl (meth)acrylates having alkyl carbon atoms in the range of from 1 to 18, preferably in the range of from 1 to 12 and styrene and functional monomers, such as, hydroxyethyl acrylate and hydroxyethyl methacrylate.

The polyester suitable for use in the present invention can have a GPC weight average molecular weight exceeding 1500, preferably in the range of from 1500 to 100,000, more preferably in the range of 2000 to 50,000, still more preferably in the range of 2000 to 8000 and most preferably in the range of from 2000 to 5000. The Tg of the polyester varies in the range of from -50°C to +100°C, preferably in the range of from -20°C to +50°C.

The polyester suitable for use in the present invention can be conventionally polymerized from suitable polyacids, including cycloaliphatic polycarboxylic acids, and suitable polyols, which include polyhydric alcohols. Examples of suitable cycloaliphatic polycarboxylic acids are tetrahydrophthalic acid, hexahydrophthalic acid, 1,2-cyclohexanedicarboxylic acid, 1,3-cyclohexanedicarboxylic acid, 1,4-cyclohexanedicarboxylic acid, 4-methylhexahydrophthalic acid, endomethylenetetrahydrophthalic acid, tricyclodecanedicarboxylic acid, endoethylenehexahydrophthalic acid, camphoric acid, cyclohexanetetracarboxylic and cyclobutanetetracarboxylic acid. The cycloaliphatic polycarboxylic acids can be used not only in their cis but also in their trans form and as a mixture of both forms. Examples of suitable polycarboxylic acids, which, if desired, can be used together with the cycloaliphatic polycarboxylic acids, are aromatic and aliphatic polycarboxylic acids, such as, for example, phthalic acid, isophthalic acid, terephthalic acid, halogenophthalic acids, such as, tetrachloro- or tetrabromophthalic acid, adipic acid, glutaric acid, azelaic acid, sebacic acid, fumaric acid, maleic acid, trimellitic acid, and pyromellitic acid.

Suitable polyhydric alcohols include ethylene glycol, propanediols, butanediols, hexanediols, neopentylglycol, diethylene glycol, cyclohexanediol, cyclohexanedimethanol, trimethylpentanediol, ethylbutylpropanediol, ditrimethylolpropane, trimethylolethane, trimethylolpropane, glycerol, pentaerythritol, dipentaerythritol, tris(hydroxyethyl) isocyanate, polyethylene glycol and polypropylene glycol. If desired, monohydric alcohols, such as, for example, butanol, octanol, lauryl alcohol, ethoxylated or propoxylated phenols may also be included along with polyhydric alcohols. The details of polyester suitable for use in the present invention are further provided in the U.S. Pat. No. 5,326,820, which is hereby incorporated herein by reference. One commercially available polyester, which is particularly preferred, is SCD^{®}-1040 polyester, which is supplied by Etna Product Inc., Chagrin Falls, Ohio.

The crosslinkable component can further include one or more reactive oligomers, such as those reactive oligomers disclosed in US 6,221,494, which is incorporated herein by reference; and non-alicyclic (linear or aromatic) oligomers, if desired. Such non-alicyclic-oligomers can be made by using non-alicyclic anhydrides, such as succinic or phthalic anhydrides, or mixtures thereof. Caprolactone oligomers described in US 5,286,782 incorporated herein by reference can also be used.

The crosslinkable component of the coating composition can further include one or more modifying resins, which are also known as non-aqueous dispersions (NADs). Such resins are sometimes used to adjust the viscosity of the resulting coating composition. The amount of modifying resin that can be used typically ranges from 10 percent to 50 percent, all percentages being based on the total weight of crosslinkable component solids. The weight average molecular weight of the modifying resin generally ranges from 20,000 to 100,000, preferably ranges from 25,000 to 80,000 and more preferably ranges from 30,000 to 50,000.

The crosslinkable or crosslinking component of coating composition of the present invention, typically contains at least one organic solvent which is typically selected from the group consisting of aromatic hydrocarbons, such as, petroleum naphtha or xylenes; ketones, such as, methyl amyl ketone, methyl isobutyl ketone, methyl ethyl ketone or acetone; esters, such as, butyl acetate or hexyl acetate; and glycol ether esters, such as propylene glycol monomethyl ether acetate. The amount of organic solvent added depends upon the desired solids level as well as the desired amount of VOC of the composition. If desired, the organic solvent may be added to both components of the binder. High solids and low VOC coating composition is preferred.

The crosslinkable component of the coating composition of the present invention typically contains 0.2 weight percent to 2.0 weight percent, preferably 0.3 weight percent to 1.4 weight percent and more preferably 0.4 weight percent to 1.2 weight percent of amorphous silica, preferably hydrophobic amorphous fumed silica. All percentages being in weight percent based on the total weight of the crosslinkable component. The applicants unexpectedly discovered that a coating composition having the aforedescribed a copolymer and the silica in the aforedescribed weight percentages improves the strike-in resistance of the coating resulting from the coating composition. The amorphous silica suitable for use in the present invention include colloidal silica, which has been partially, or totally surface modified through the silanization of hydroxyl groups on the silica particle, thereby rendering part or all of the silica particle surface hydrophobic. Examples of suitable hydrophobic silica include AEROSIL R972, AEROSIL R812 and AEROSIL R805, all commercially available from Degussa Corporation. Particularly preferred fumed silica is available from Degussa Corporation as AEROSIL R 812. Other commercially available silica include SIBELITE^{®} M3000 (Cristobalite), SIL-CO-SIL^{®}, ground silica, MIN-U-SIL^{®}, micronized silica, all supplied by U.S. Silica Company, Berkeley Springs, West Virginia.

The silica can be dispersed in the copolymer by a milling process using conventional equipment such as high-speed blade mixers, ball mills, or sand mills. Preferably, the silica is dispersed separately in the acrylic polymer described earlier and then the dispersion can be added to the crosslinkable component of the coating composition.

The coating composition is preferably formulated as a two-pack coating composition wherein the crosslinkable component is stored in separate container from the crosslinking component, which are mixed to form a pot mix just before use.

The coating composition is preferably formulated as an automotive OEM composition or as an automotive refinish composition. These compositions can be applied as a basecoat or as a pigmented monocoat topcoat over a substrate. These compositions require the presence of pigments. Typically, a pigment-to-binder ratio of 1.0/100 to 200/100 is used depending on the color and type of pigment used. The pigments are formulated into mill bases by conventional procedures, such as, grinding, sand milling, and high speed mixing. Generally, the mill base comprises pigment and a dispersant in an organic solvent. The mill base is added in an appropriate amount to the coating composition with mixing to form a pigmented coating composition.

Any of the conventionally used organic and inorganic pigments, such as, white pigments, like, titanium dioxide, color pigments, metallic flakes, such as, aluminum flake, special effects pigments, such as, coated mica flakes, coated aluminum flakes and extender pigments can be used.

The coating composition can also include other conventional formulation additives, such as, wetting agents, leveling and flow control agents, for example, Resiflow^{®} S (polybutylacrylate), BYK^{®} 320 and 325 (high molecular weight polyacrylates), BYK^{®} 347 (polyether-modified siloxane), defoamers, surfactants and emulsifiers to help stabilize the composition. Other additives that tend to improve mar resistance can be added, such as, silsesquioxanes and other silicate-based micro-particles.

To improve weatherability of the clear finish of the coating composition, about 0.1 % to 5% by weight, based on the weight of the composition solids, of an ultraviolet light stabilizer or a combination of ultraviolet light stabilizers and absorbers can be added. These stabilizers include ultraviolet light absorbers, screeners, quenchers and specific hindered amine light stabilizers. Also, about 0.1 % to 5% by weight, based on the weight of the composition solids, of an antioxidant can be also added. Most of the foregoing stabilizers are supplied by Ciba Specialty Chemicals, Tarrytown, New York.

The coating composition of the present invention is preferably formulated in the form of a two-pack coating composition. The present invention is particularly useful as a basecoat for outdoor articles, such as automobile and other vehicle body parts. A typical auto or truck body is produced from a steel sheet or a plastic or a composite substrate. For example, the fenders may be of plastic or a composite and the main portion of the body of steel. If steel is used, it is first treated with an inorganic rust-proofing compound, such as, zinc or iron phosphate, called an E-coat and then a primer coating is applied generally by electrodeposition. Typically, these electrodeposition primers are epoxy-modified resins crosslinked with a polyisocyanate and are applied by a cathodic electrodeposition process. Optionally, a primer can be applied over the electrodeposited primer, usually by spraying, to provide better appearance and/or improved adhesion of a base coating or a mono coating to the primer.

The present invention is also directed to a process for producing a multi-coat system on a substrate. The process includes the following process steps:

The cross-linkable component of the aforedescribed coating composition of the present invention is mixed with the crosslinking component of the coating composition to form a pot-mix. Generally, the crosslinkable component and the crosslinking component are mixed just prior to application to form a pot mix. The mixing can take place though a conventional mixing nozzle or separately in a container.

A layer of the pot mix generally having a thickness in the range of 15 micrometers to 200 micrometers is applied over a substrate, such as an automotive body or an automotive body that has precoated with a conventional E-coat followed by a conventional primer, or a conventional primer. The foregoing application step can be conventionally accomplished by spraying, electrostatic spraying, commercially supplied robot spraying system, roller coating, dipping, flow coating or brushing the pot mix over the substrate. The layer after application is flashed, i.e., exposed to air, to reduce the solvent content from the potmix layer to produce a strike-in resistant layer. The time period of the flashing step ranges from 5 to 15 minutes. Then a layer of a conventional clearcoat composition having a thickness in the range of 15 micrometers to 200 micrometers is conventionally applied by the application means described earlier over the strike-in resistant layer to form a multi-layer system on the substrate. Any suitable conventional clear coating compositions can be used in the multi-coat system of the present invention. For example, suitable clearcoats for use over the basecoat of this invention include solvent borne organosilane polymer containing clear coating composition disclosed US 5,244,696; solvent borne polyisocyanate crosslinked clear coating composition, disclosed in US 6,433,085; clear thermosetting compositions containing epoxy-functional polymers disclosed in US 6,485788; wherein all of the forgoing patents are hereby incorporated herein by reference.

The multi-layer system is then cured into said multi-coat system under ambient conditions, at elevated temperatures, or under ambient conditions followed by elevated temperatures. The cure temperature can range from ambient to 204°C. Under typical automotive OEM applications, the multi-layer system can be typically cured at elevated temperatures ranging from 60°C to 160°C in about 10 to 60 minutes. Preferably, for automotive refinish applications curing can take place at about ambient to 60°C, and for heavy-duty truck body applications it can take place at about 60°C to 80°C. The cure under ambient conditions occurs in about 30 minutes to 24 hours, generally in about 30 minutes to 4 hours to form a coating on the substrate having the desired coating properties. It is further understood that the actual curing time can depend upon the thickness of the applied layer, the cure temperature, humidity and on any additional mechanical aids, such as fans, that assist in continuously flowing air over the coated substrate to accelerate the cure rate. It is understood that actual curing temperature would vary depending upon the catalyst and the amount thereof, thickness of the layer being cured and the amount of the crosslinking component utilized. For example, the curing step can be accelerating by adding a catalytically active amount of a catalyst or acid catalyst to the composition.

It should be noted that if desired the present invention also includes a method of applying a layer of the aforedescribed pot mix, which is then cured to produce a coating, such as a basecoat, on a substrate that may or may not include other previously applied coatings, such as an E-coat or a primer coat.

The suitable substrates for applying the coating composition of the present invention include automobile bodies, any and all items manufactured and painted by automobile sub-suppliers, frame rails, commercial trucks and truck bodies, including but not limited to beverage bodies, utility bodies, ready mix concrete delivery vehicle bodies, waste hauling vehicle bodies, and fire and emergency vehicle bodies, as well as any potential attachments or components to such truck bodies, buses, farm and construction equipment, truck caps and covers, commercial trailers, consumer trailers, recreational vehicles, including but not limited to, motor homes, campers, conversion vans, vans, pleasure vehicles, pleasure craft snow mobiles, all terrain vehicles, personal watercraft, motorcycles, boats, and aircraft. The substrate further includes industrial and commercial new construction and maintenance thereof; cement and wood floors; leather; walls of commercial and residential structures, such office buildings and homes; amusement park equipment; concrete surfaces, such as parking lots and drive ways; asphalt and concrete road surface, wood substrates, marine surfaces; outdoor structures, such as bridges, towers; coil coating; railroad cars; printed circuit boards; machinery; OEM tools; signage; fiberglass structures; sporting goods; and sporting equipment.

### EXAMPLES

### Test Procedures

### BK Dry Time

Surface drying times of coated panels measured according to ASTM D5895.

### Viscosity Measurement

The viscosity of the pot mix (mixture of all of the components of the coating composition) of the coating compositions was measured by using the conventional Zahn #3 cup supplied by VWR Scientific Products Corporation. The viscosity was measured as soon as the pot mix was prepared. The reading was recorded as number of seconds it took for the pot mix to drain from the Zahn #3 cup [ASTM D1084 (Method D)].

### Gloss Measurement

Gloss was measured at 20° using a Byk-Gardener Glossmeter.

### Distinctness of Image (DOI)

DOI was measured using a Hunterlab Model RS 232 (HunterLab, Reston, VA).

### EXAMPLES

### Acid Functional Acrylic Copolymer 1

### (Sty/BA/IBOA/HPMA/HEMA/MAA : 20.0/40.0/20.0/7.5/7.5/5.0% by weight)

A 12-liter flask was equipped with a thermometer, stirrer, funnels, heating mantle, reflux condenser and a means for maintaining a nitrogen blanket over the reactants. The flask was held under nitrogen positive pressure and the following ingredients were charged to the flask in the order shown in Table 1 and in through a procedure described below:

**Table 1**

| **Portion 1** | **Weight (gram)** |
|---|---|
| Methyl amyl ketone | 649.6 |

| **Portion 2** | |
|---|---|
| Styrene (Sty) | 473.8 |
| Butyl acrylate (BA) | 947.6 |
| Methacrylic acid (MAA) | 118.4 |
| Isobornyl acrylate (IBOA) | 473.8 |
| Hydroxypropyl methacrylate (HPMA) | 177.7 |
| 2-Hydroxyethyl methacrylate (HEMA) | 177.7 |

| **Portion 3** | |
|---|---|
| Methyl amyl ketone | 38.5 |

| **Portion 4** | |
|---|---|
| Initiator* | 13.0 |
| Methyl amyl ketone | 384.9 |

| **Portion 5** | |
|---|---|
| Methyl amyl ketone | 28.9 |

| **Portion 6** | |
|---|---|
| Methyl amyl ketone | 116.1 |
| | Total 3600.0 |

| | |
|---|---|
| * Di-t-butyl peroxide supplied by Elf Atochem North America, Inc., Philadelphia, Pennsylvania. | |

Portion 1 was charged to the flask and heated to reflux temperature. Portion 2 was fed to the reactor over 195 minutes while Portion 3 was simultaneously fed to the reactor over 200 minutes. The reaction mixture was held at reflux temperature throughout the course of the additions. Portion 4 was then added as a rinse for Portion 2 at the end of the feed, and Portion 5 was added as a rinse for Portion 3. Reflux was continued for another 2 hours. Portion 6 was added and the solution was cooled to room temperature and filled out. The resulting polymer solution was clear and had a solid content of about 65.7% and a Gardner-Holt viscosity of Z1. The polymer had a GPC Mw of 21,499 and GPC Mn of 5,800 based on GPC using polystyrene as the standard and a Tg of 25.6°C as measured by DSC.

### Acid Functional Acrylic Copolymer 2

### (Sty/BA/EHA/IBOA/HPMA/HEMA/MAA : 15.0/30.0/20.0/15.0/7.5/7.5/5.0% by weight)

The following ingredients were charged to the flask in the order shown in Table 2 and in through a procedure described above in Example 1:

**Table 2**

| **Portion 1** | **Weight (gram)** |
|---|---|
| Methyl amyl ketone | 649.6 |

| **Portion 2** | |
|---|---|
| Styrene (Sty) | 355.3 |
| Butyl acrylate (BA) | 710.7 |
| Methacrylic acid (MAA) | 118.4 |
| 2-Ethylhexyl acrylate (EHA) | 473.8 |
| Isobornyl acrylate (IBOA) | 355.3 |
| Hydroxypropyl methacrylate (HPMA) | 177.7 |
| 2-Hydroxyethyl methacrylate (HEMA) | 177.7 |

| **Portion 3** | |
|---|---|
| Methyl amyl ketone | 38.5 |

| **Portion 4** | |
|---|---|
| Initiator* | 13.0 |
| Methyl amyl ketone | 384.9 |

| **Portion 5** | |
|---|---|
| Methyl amyl ketone | 28.9 |

| **Portion 6** | |
|---|---|
| Methyl amyl ketone | 116.1 |
| | Total 3600.0 |

| | |
|---|---|
| * Di-t-butyl peroxide supplied by Elf Atochem North America, Inc., Philadelphia, Pennsylvania. | |

The resulting polymer solution was clear and had a solid content of about 65.5% and a Gardner-Holt viscosity of W-1/2. The polymer had a GPC Mw of 15,049 an GPC Mn of 4,789 based on GPC using polystyrene as the standard and a Tg of + 3.7°C as measured by DSC.

### Acid Functional Acrylic Copolymer 3

### (Sty/BA/IBOA/HPMA/HEMA/MAA : 29.0/31.0/20.0/7.5/7.5/5.0% by weight)

The following ingredients were charged to the flask in the order shown in Table 3 and in through a procedure described above in Example 1:

**Table 3**

| **Portion 1** | **Weight (gram)** |
|---|---|
| Methyl amyl ketone | 1243.0 |

| **Portion 2** | |
|---|---|
| Styrene (Sty) | 1314.7 |
| Butyl acrylate (BA) | 1405.3 |
| Methacrylic acid (MAA) | 226.7 |
| Isobornyl acrylate (IBOA) | 906.8 |
| Hydroxypropyl methacrylate (HPMA) | 339.9 |
| 2-Hydroxyethyl methacrylate (HEMA) | 339.9 |

| **Portion 3** | |
|---|---|
| Methyl amyl ketone | 73.7 |

| **Portion 4** | |
|---|---|
| Initiator* | 24.9 |
| Methyl amyl ketone | 736.6 |

| **Portion 5** | |
|---|---|
| Methyl amyl ketone | 55.2 |

| **Portion 6** | |
|---|---|
| Methyl amyl ketone | 533.3 |
| | Total 7200 |

| | |
|---|---|
| * Di-t-butyl peroxide supplied by Elf Atochem North America, Inc., Philadelphia, Pennsylvania. | |

The resulting polymer solution was clear and had a solid content of about 64.4% and a Gardner-Holt viscosity of Y+1/2. The polymer had a GPC Mw of 24,601 and GPC Mn of 7,087 based on GPC using polystyrene as the standard and a Tg of+ 44.3°C as measured by DSC.

### Low Mw Acrylic Dispersion Polymer for Pigment

### (Sty/MMA/EHA/HEMA/IBOMA/BMA : 10/10/15/30/10/25% by weight)

A 12-liter flask was equipped with a thermometer, stirrer, funnels, heating mantle, reflux condenser and a means for maintaining a nitrogen blanket over the reactants. The flask was held under nitrogen positive pressure and the following ingredients were charged to the flask in the order shown in Table 4 and in through a procedure described below:

**Table 4**

| **Portion 1** | **Weight (gram)** |
|---|---|
| Butyl acetate | 1489.83 |

| **Portion 2** | |
|---|---|
| Styrene (Sty) | 447.95 |
| Methyl methacrylate (MMA) | 1119.86 |
| 2-Ethylhexyl acrylate (EHA) | 671.92 |
| 2-Hydroxyethyl methacrylate (HEMA) | 1343.84 |
| Isobornyl methacrylate (IBOMA) | 447.95 |
| Butyl methacrylate (BMA) | 447.95 |

| **Portion 3** | |
|---|---|
| Intiator* | 418.08 |
| Butyl acetate | 725.56 |

| **Portion 4** | |
|---|---|
| Butyl acetate | 87.07 |
| | Total 7200.01 |

| | |
|---|---|
| * Lupersol^{®} 70 t-butyl peroxyacetate (75%) supplied by Elf Atochem North America, Inc., Philadelphia, Pennsylvania. | |

Portion 1 was charged to the flask and heated to reflux temperature. Portion 2 and 90% of the Portion 3 were simultaneously fed to the reactor over 300 minutes. The reaction mixture was held at reflux temperature throughout the course of the additions. The reaction mixture was refluxed for 30 minutes, and then the remaining 10% of the Portion 3 was fed to the reactor over 30 minutes. At the end of the feed, Portion 4 was used to rinse the feed line. Reflux was continued for another 2 hours. The polymer solution was cooled to room temperature and filled out. The resulting polymer solution was clear and had a solid content of about 66.6% and a Gardner-Holt viscosity of Y. The polymer had a GPC Mw of 5,591 and a GPC Mn of 2,985 based on GPC using polystyrene as the standard.

### Low Mw Dispersion Polyester

### (NPG/TMP/HDPA/AA : 41.51/8.98/25.41/24.09% by weight)

A 12-liter flask was equipped with a thermometer, stirrer, funnels, heating mantle, reflux condenser and a means for maintaining a nitrogen blanket over the reactants. The flask was held under nitrogen positive pressure and the following ingredients were charged to the flask in the order shown in Table 5 and in through a procedure described below:

**Table 5**

| **Portion 1** | **Weight (gram)** |
|---|---|
| Deionized water | 452.70 |
| Neopentyl gylcol (NPG) | 4074.30 |
| Monobutyl tin oxide | 5.40 |

| **Portion 2** | |
|---|---|
| Trimethylol propane (TMP) | 881.60 |
| Hexahydrophthalic anhydride (HDPA) | 2494.10 |
| Adipic acid (AA) | 2364.30 |
| Aromatic hydrocarbon* | 371.80 |

| **Portion 3** | |
|---|---|
| Ethyl acetate | 846.00 |

| **Portion 4** | |
|---|---|
| Ethyl acetate | 358.10 |
| | Total 11848.30 |

| | |
|---|---|
| * 154-174C distillation cut supplied by ExxonMobil Chemical Co., Huston, Texas. | |

Portion 1 was charged in order to the flask and heated to 70°C to melt the mixture. Portion 2 was charged in order with mixing. The mixture was heated to distill water without exceeding the temperature of 240°C until the acid number of 3.0 -7.0 was reached. The flask content were cooled and diluted with Portion 3. The Portion 4 was used to adjust the solids and viscosity to the desired range. The resulting polymer solution was clear and had a solid content of 85.6% and a Gardner-Holtz viscosity of Z+1/2. The polymer had a GPC Mw of 2,210 and a GPC Mn of 1,058 based on GPC using polystyrene as the standard.

### Silica Dispersion Example

**Table 6**

| **Ingredient** | **Weight (gram)** |
|---|---|
| **Portion 1** | |
| Low MW acrylic copolymer | 10,976 |
| Methyl amyl ketone | 9,296 |
| Isopropanol | 5,208 |

| **Portion 2** | |
|---|---|
| Amorphous silica powder | 2,520 |
| | Total 28,000 |

The Portion 1 was mixed for 15 minutes. The silica powder was slowly added with mixing for a smooth incorporation over 1 hour. The mixture was then passed through a sand mill that was loaded with 0.8 mm glass beads at a rate of 125 seconds per pint.

### Paint Example Set 1

The ingredients were mixed well to make a crosslinkable component for a blue metallic topcoat coating composition.

**Table 7**

| **Ingredient** | **Weight (gram)** | | | | | |
|---|---|---|---|---|---|---|
| | Comp. Ex. 1 | Comp. Ex. 2 | Ex 4 | Ex. 1 | Ex. 2 | Ex.3 |
| Silica dispersion | 0.0 | 24.5 | 11.1 | 11.1 | 11.1 | 11.1 |
| Low MW polyol | | 8.5 | 3.9 | 3.9 | 3.9 | 3.9 |
| Acid functional | | | | | 15.9 | |
| acrylic copolymer 1 | | | | | | |
| Acid functional | | | | | | 15.9 |
| acrylic copolymer 2 | | | | | | |
| Acid functional | 15.9 | 15.9 | 4.3 | 15.9 | | |
| acrylic copolymer 3 | | | | | | |
| Low MW polyester | 32.6 | 12.7 | 32.3 | 23.5 | 23.5 | 23.5 |
| 513H¹. | 2.2 | 2.1 | 2.1 | 2.1 | 2.1 | 2.1 |
| 522H¹. | 5.0 | 4.7 | 4.9 | 4.8 | 4.8 | 4.8 |
| 504H¹. | 6.6 | 6.2 | 6.5 | 6.4 | 6.4 | 6.4 |
| 507H¹. | 21.4 | 20.3 | 21.0 | 20.9 | 20.9 | 20.9 |
| Dibutyl tin dilaurate | 0.01 | 0.01 | 0.01 | 0.01 | 0.01 | 0.01 |
| Heptane | 0.8 | 1.2 | 0.9 | 0.9 | 0.9 | 09 |
| Ethyl acetate | 1.7 | 1.3 | 1.5 | 1.6 | 1.6 | 1.6 |
| 8685S². | 13.8 | 2.6 | 11.5 | 8.9 | 8.9 | 8.9 |
| | 100.0 | 100.0 | 100.0 | 100.0 | 100.0 | 100.0 |
| Total | | | | | | |

| | | | | | | |
|---|---|---|---|---|---|---|
| 1. DuPont Master Tint, high solids mixing color for OEM/Fleet paint product, Wilmington, DE. 2. DuPont Imron^{®} 5000 reducer, Wilmington DE. | | | | | | |

The resulting crosslinkable component had the following characteristics.

**Table 8**

| | Comp. Ex.1 | Comp. Ex. 2 | Ex 4 | Ex. 1 | Ex. 2 | Ex. 3 |
|---|---|---|---|---|---|---|
| % Silica¹ | 0.0 | 2.2 | 1.0 | 1.0 | 1.0 | 1.0 |
| % Acid functional acrylic copolymer¹. | 10 | 10 | 2.7 | 10 | 10 | 10 |
| Viscosity (cps)². | 315 | 1205 | 455 | 615 | 405 | 420 |
| Viscosity (sec.)³. | 13.7 | 23.2 | 12.6 | 15.4 | 11.3 | 13.5 |
| Viscosity (sec.)⁴. | 14 | 14.6 | 11.2 | 14 | 12 | 10.5 |
| Viscosity (sec.)⁵. | 23.4 | 23.5 | 14.2 | 21.8 | 17.4 | 16.4 |

| | | | | | | |
|---|---|---|---|---|---|---|
| 1. All percentages are based on the solid content of the total weight of the crosslinkable component. 2. Measured by Brookfield viscometer at 20 rpm using a #2 spindle. 3. Measured by a Zahn 3 cup. 4. Measured by a Zahn 3 cup after the crosslinkable component was mixed with the crosslinking component and the paint is ready to spray. 5. Measured by a Zahn 3 cup one hour after the crosslinkable component was mixed with the crosslinking component. | | | | | | |

The crosslinkable component was mixed with a polyisocyanate based crosslinking component, DuPont Imron^{®} 194S, in a volume ratio of 3:1. The resulting coating composition was immediately sprayed onto an aluminum panel until the film thickness of the paint is high enough to hide the standard black and white hiding sticker commonly used in the industry. The panel was air dried for about 15 minutes before it was placed vertically in an oven and cured at 82°C (180°F) for 30 minutes to produce a blue metallic colored topcoat.

**Table 9**

| | Comp. Ex. 1 | Comp. Ex. 2 | Ex 4 | Ex. 1 | Ex. 2 | Ex. 3 |
|---|---|---|---|---|---|---|
| Film thickness (mil) | 2.2-2.4 | 2.1-2.4 | 2.1-2.4 | 2.0-2.4 | 2.9-3.3 | 2.3-2.6 |
| 20 gloss | 78 | 78 | 76 | 76 | 79 | 79 |
| 60 gloss | 90 | 91 | 89 | 89 | 89 | 90 |
| DOI | 76 | 62 | 70 | 75 | 81 | 83 |
| Appearance rating | 6.7 | 2.7 | 6.3 | 6.1 | 6.2 | 6.0 |

| | | | | | | |
|---|---|---|---|---|---|---|
| 1. All percentages are based on the total weight of the crosslinkable component. 2. Measured by Brookfield viscometer at 20 rpm using a #2 spindle. 3. Measured by a Zahn 3 cup | | | | | | |

Comparative Example 1 showed a slight tendency to sag. Comparative Example 2 had a high viscosity, which adversely affected the spraying properties, and poor flow properties. The resulting panel had a orange-peel like uneven appearance and a low DOI. Example 4 showed a blotchy or mottled appearance. The three further examples of this invention had nice spraying properties and the resulting panels showed improved appearance.

## Claims

1. A coating composition comprising:
a crosslinkable component comprising an acid functional acrylic copolymer polymerized from a monomer mixture comprising 2 percent to 12 percent of one or more carboxylic acid group containing monomers, percentages based on total weight of the acid functional acrylic copolymer, and 0.2 percent to 2 percent of amorphous silica, percentages based on total weight of the crosslinkable component; and
a crosslinking component.

2. The coating composition of claim 1 wherein said acid functional acrylic copolymer has a GPC weight average molecular weight ranging from 8,000 to 100,000 and a polydispersity ranging from 1.05 to 10.0.

3. The coating composition of claim 1 or 2 wherein said acid functional acrylic copolymer has Tg ranging from -5°C to + 100°C.

4. The coating composition of claim 1 wherein said monomer mixture comprises one or more functional (meth)acrylate monomers and one or more non-functional (meth)acrylate monomers.

5. The coating composition of claim 4 wherein said monomer mixture comprises 5 percent to 40 percent based on total weight of the acid functional acrylic copolymer of said functional (meth)acrylate monomers.

6. The coating composition of claim 5 wherein said functional (moth)acrylate monomer is provided with one or more crosslinkable groups selected from the group consisting of a primary hydroxyl, secondary hydroxyl and a combination thereof.

7. The coating composition of claim 1,4,5 or 6 wherein said functional (meth)acrylate monomer is selected form the group consisting of hydroxyethyl (meth)acrylate, hydroxypropyl (meth)acrylate, hydroxyisopropyl (meth)acrylate, hydroxybutyl (meth)acrylate, and a combination thereof.

8. The coating composition of claim 1 said carboxylic acid group containing monomer comprises one or more carboxylic acids selected from the group consisting of (meth)acrylic acid, crotonic acid, oleic acid, cinnamic acid, glutaconic acid, muconic acid, undecylenic acid, itaconic acid, crotonic acid, fumaric acid, maleic acid, and a combination thereof.

9. The coating composition of claim 4 wherein said non-functional (meth)acrylate monomer is selected from the group consisting of (meth)acrylate, ethyl (meth)acrylate, propyl (meth)acrylate, butyl (meth)acrylate, pentyl (meth)acrylate, hexyl (meth)acrylate, octyl (meth)acrylate, nonyl (meth)acrylate, isodecyl (meth)acrylate, lauryl (meth)acrylate, isobutyl (meth)acrylate, t-butyl (meth)acrylate 2-ethylhexyl (meth)acrylate, cyclohexyl (meth)acrylate, methylcyclohexyl (meth)acrylate, trimethylcyclohexyl (meth)acrylate, tertiarybutylcyclohexyl (meth)acrylate, isobornyl (meth)acrylate and a combination thereof.

10. The coating composition of claim 1 or 4 wherein said monomer mixture comprises styrene.

11. The coating composition of claim 1 wherein said crosslinking component comprises a polyisocyanate, melamine or a combination thereof.

12. The coating composition of claim 11 wherein a ratio of equivalents of isocyanate functionalities on said polyisocyanate per equivalents of all the functional groups present in the crosslinking component ranges from 0.5/1 to 3.0/1.

13. The coating composition of claim 11 comprising 0.1 weight percent to 40 weight percent of said melamine, wherein said percentages are based on total weight of composition solids.

14. The coating composition of claim 12 further comprising a catalytically active amount of one or more catalysts.

15. The coating composition of claim 13 further comprising a catalytically active amount of one or more acid catalysts.

16. The coating composition of claim 1, wherein the crosslinkable component further comrpsises an acrylic polymer, polyester or a combination thereof.

17. The coating composition of claim 1 wherein said crosslinkable component further comprises one or more reactive oligomers.

18. The coating composition of claim 1, wherein the crosslinkable component further comprises a modifying resin.

19. The coating composition of claim 1 further comprising pigments, special effect pigments and a combination thereof.

20. The coating composition of claim 1 formulated as a two-pack coating composition.

21. The coating composition of claim 1 or 20 formulated as an automotive OEM composition.

22. The coating composition of claim 1 or 20 formulated as an automotive refinish composition.

23. The coating composition of claim 1 or 20 formulated as a low VOC coating composition comprising a solvent ranging of from 0.1 kilograms (1.0 pounds per gallon) to 0.72 kilograms (6.0 pounds per gallon) per liter of said composition.

24. The coating composition of claim 1 wherein said crosslinkable component comprises 2 weight percent to 25 weight percent of one or more acid functional acrylic copolymers, all percentages being based on the total weight of the crosslinkable component.

25. A process for producing a coating on a substrate comprising:
(a) mixing a cross-linkable component of a coating composition with a crosslinking component of said coating composition to form a pot-mix, said crosslinkable component comprising an acid functional acrylic copolymer polymerized from a monomer mixture comprising 2 weight percent to 12 weight percent of carboxylic acid group containing monomer based on total weight of the acid functional acrylic copolymer, and 0.2 weight percent to 2 weight percent of amorphous silica based on total weight of the crosslinkable component;
(b) applying a layer of said pot-mix over said substrate; and
(c) curing said layer into said coating on said substrate.

26. The process of claim 25 wherein said curing step takes place under ambient conditions, at elevated temperatures, or under ambient conditions followed by elevated temperatures.

27. The process of claim 25 wherein said substrate is an automotive body.

## Patentansprüche

1. Beschichtungszusammensetzung, aufweisend:
eine vernetzbare Komponente, die ein säurefunktionelles Acrylcopolymer aufweist, das polymerisiert ist aus einem Monomergemisch, das 2 Prozent bis 12 Prozent von einer oder mehreren Carbonsäure-Gruppen enthaltenden Monomeren aufweist, wobei die Prozentangaben bezogen sind auf das Gesamtgewicht des säurefunktionellen Acrylcopolymers; sowie 0,2 Prozent bis 2 Prozent amorphes Siliciumdioxid, wobei die Prozentangaben bezogen sind auf das Gesamtgewicht der vernetzbaren Komponente; und
eine vernetzende Komponente.

2. Beschichtungszusammensetzung nach Anspruch 1, wobei das säurefunktionelle Acrylcopolymer eine massegemittelte relative Molekülmasse nach GPC im Bereich von 8000 bis 100000 und eine Polydispersität im Bereich von 1,05 bis 10,0 hat.

3. Beschichtungszusammensetzung nach Anspruch 1 oder 2, wobei das säurefunktionelle Acrylcopolymer eine Tg im Bereich von -5° bis +100°C hat.

4. Beschichtungszusammensetzung nach Anspruch 1, wobei das Monomergemisch ein oder mehrere funktionelle (Meth)acrylat-Monomere aufweist sowie ein oder mehrere nichtfunktionelle (Meth)acrylatMonomere.

5. Beschichtungszusammensetzung nach Anspruch 4, wobei das Monomergemisch, bezogen auf das Gesamtgewicht des säurefunktionellen Acrylcopolymers, 5 Prozent bis 40 Prozent der funktionellen (Meth)acrylat-Monomere aufweist.

6. Beschichtungszusammensetzung nach Anspruch 5, wobei das funktionelle (Meth)acrylat-Monomer mit einer oder mehreren vernetzbaren Gruppen ausgestattet ist, die ausgewählt sind aus der Gruppe, bestehend aus einem primären Hydroxyl, sekundären Hydroxyl und einer Kombination davon.

7. Beschichtungszusammensetzung nach Anspruch 1, 4, 5 oder 6, wobei das funktionelle (Meth)acrylat-Monomer ausgewählt ist aus der Gruppe, bestehend aus: Hydroxyethyl(meth)acrylat, Hydroxypropyl(meth)acrylat, Hydroxyisopropyl(meth)acrylat, Hydroxybutyl(meth)acrylat und einer Kombination davon.

8. Beschichtungszusammensetzung nach Anspruch 1, wobei das Carbonsäure-Gruppe enthaltende Monomer eine oder mehrere Carbonsäuren aufweist, die ausgewählt sind aus der Gruppe, bestehend aus:
(Meth)acrylsäure, Crotonsäure, Oleinsäure, Cinnamonsäure, Glutaconsäure, Muconsäure, Undecylensäure, Itaconsäure, Crotonsäure, Fumarsäure, Maleinsäure und einer Kombination davon.

9. Beschichtungszusammensetzung nach Anspruch 4, wobei das nichtfunktionelle (Meth)acrylat-Monomer ausgewählt ist aus der Gruppe, bestehend aus: (Meth)acrylat, Ethyl(meth)acrylat, Propyl(meth)acrylat, Butyl(meth)acrylat, Pentyl(meth)acrylat, Hexyl(meth)acrylat, Octyl(meth)acrylat, Nonyl(meth)acrylat, Isodecyl(meth)acrylat, Lauryl(meth)acrylat, Isobutyl(meth)acrylat, *tert-*Butyl(meth)acrylat, 2-Ethylhexyl(meth)acrylat, Cyclohexyl(meth)acrylat, Methylcyclohexyl(meth)acrylat, Trimethylcyclohexyl(meth)acrylat, *tert*-Butylcyclohexyl(meth)acrylat, Isobornyl(meth)acrylat und einer Kombination davon.

10. Beschichtungszusammensetzung nach Anspruch 1 oder 4, wobei das Monomergemisch Styrol aufweist.

11. Beschichtungszusammensetzung nach Anspruch 1, wobei die vernetzende Komponente Polyisocyanat, Melamin oder eine Kombination davon aufweist.

12. Beschichtungszusammensetzung nach Anspruch 11, wobei der Anteil der Äquivalente von Isocyanat-Funktionalitäten an dem Polyisocyanat pro Äquivalent aller funktionellen Gruppen, die in der vernetzenden Komponente vorhanden sind, im Bereich von 0,5/1 bis 3,0/1 liegt.

13. Beschichtungszusammensetzung nach Anspruch 11, aufweisend 0,1 Prozent bis 40 Gewichtsprozent des Melamins, wobei die Prozentangaben bezogen sind auf das Gesamtgewicht der Feststoffe der Zusammensetzung.

14. Beschichtungszusammensetzung nach Anspruch 12, ferner aufweisend eine katalytisch wirksame Menge eines oder mehrerer Katalysatoren.

15. Beschichtungszusammensetzung nach Anspruch 13, ferner aufweisend eine katalytisch wirksame Menge eines oder mehrerer saurer Katalysatoren aufweist.

16. Beschichtungszusammensetzung nach Anspruch 1, wobei die vernetzbare Komponente ferner ein Acrylpolymer, Polyester oder eine Kombination davon aufweist.

17. Beschichtungszusammensetzung nach Anspruch 1, wobei die vernetzbare Komponente ferner ein oder mehrere reaktionsfähige Oligomere aufweist.

18. Beschichtungszusammensetzung nach Anspruch 1, wobei die vernetzbare Komponente ferner ein modifizierendes Harz aufweist.

19. Beschichtungszusammensetzung nach Anspruch 1, ferner aufweisend Pigmente, Spezialeffekt-Pigmente und eine Kombination davon.

20. Beschichtungszusammensetzung nach Anspruch 1, formuliert als eine zweikomponentige Beschichtungszusammensetzung.

21. Beschichtungszusammensetzung nach Anspruch 1 oder 20, formuliert als ein Automobil-OEM-Lack.

22. Beschichtungszusammensetzung nach Anspruch 1 oder 20, formuliert als ein Autoreparaturlack.

23. Beschichtungszusammensetzung nach Anspruch 1 oder 20, formuliert als Beschichtungszusammensetzung mit geringen flüchtigen organischen Verbindungen und aufweisend ein Lösemittel im Bereich von 0,1 kg (1,0 Pound per gallon) bis 0,72 kg (6,0 Pound per gallon) pro Liter der Zusammensetzung.

24. Beschichtungszusammensetzung nach Anspruch 1, wobei die vernetzbare Komponente 2 Prozent bis 25 Gewichtsprozent eines oder mehrerer säurefunktioneller Copolymere aufweist und alle Prozentangaben bezogen sind auf das Gesamtgewicht der vernetzbaren Komponente.

25. Verfahren zum Herstellen einer Beschichtung auf einem Substrat, umfassend:
(a) Mischen einer vernetzbaren Komponente einer Beschichtungszusammensetzung mit einer vernetzenden Komponente der Beschichtungszusammensetzung um ein gebrauchsfertiges Gemisch zu erzeugen, wobei die vernetzende Komponente ein säurefunktionelles Acrylcopolymer aufweist, das polymerisiert ist aus einem Monomergemisch und, bezogen auf das Gesamtgewicht des säurefunktionellen Acrylcopolymers enthaltenden, 2 Prozent bis 12 Gewichtsprozent Carbonsäure-Gruppe enthaltendes Monomer aufweist sowie, bezogen auf das Gesamtgewicht der vernetzbaren Komponente 0,2 Prozent bis 2 Gewichtsprozent amorphes Siliciumdioxid;
(b) Auftragen einer Lage des gebrauchsfertigen Gemisches auf dem Substrat und
(c) Härten der Lage zu einer Beschichtung auf dem Substrat.

26. Verfahren nach Anspruch 25, wobei der Schritt des Härtens unter Umgebungsbedingungen erfolgt, bei erhöhten Temperaturen oder unter Umgebungsbedingungen, gefolgt von erhöhten Temperaturen.

27. Verfahren nach Anspruch 25, wobei das Substrat eine Autokarosserie ist.

## Revendications

1. Composition de revêtement comprenant:
un constituant réticulable comprenant un copolymère acrylique à fonction acide polymérisé à partir d'un mélange de monomères comprenant 2 pour cent à 12 pour cent d'un ou plusieurs monomères contenant un groupe acide carboxylique, les pourcentages étant sur la base du poids total du copolymère acrylique à fonction acide, et 0,2 pour cent à 2 pour cent de silice amorphe, les pourcentages étant sur la base du poids total du constituant réticulable; et
un constituant de réticulation.

2. Composition de revêtement selon la revendication 1, dans laquelle ledit copolymère acrylique à fonction acide a un poids moléculaire moyen en poids par GPC allant de 8000 à 100000 et une polydispersité allant de 1,05 à 10,0.

3. Composition de revêtement selon la revendication 1 ou 2, dans laquelle ledit copolymère acrylique à fonction acide a une Tg allant de -5°C à +100°C.

4. Composition de revêtement selon la revendication 1, dans laquelle ledit mélange de monomères comprend un ou plusieurs monomères (méth)acrylates fonctionnels et un ou plusieurs monomères (méth)acrylates non fonctionnels.

5. Composition de revêtement selon la revendication 4, dans laquelle ledit mélange de monomères comprend 5 pour cent à 40 pour cent, sur la base du poids total du copolymère acrylique à fonction acide, desdits monomères (méth)acrylates fonctionnels.

6. Composition de revêtement selon la revendication 5, dans laquelle ledit monomère (méth)acrylate fonctionnel est doté d'un ou plusieurs groupes réticulables choisis dans le groupe constitué par un hydroxyle primaire, un hydroxyle secondaire et une combinaison de ceux-ci.

7. Composition de revêtement selon la revendication 1, 4, 5 ou 6, dans laquelle ledit monomère (méth)acrylate fonctionnel est choisi dans le groupe constitué par le (méth)acrylate d'hydroxyéthyle, le (méth)acrylate d'hydroxypropyle, le (méth)acrylate d'hydroxyisopropyle, le (méth)acrylate d'hydroxybutyle, et une combinaison de ceux-ci.

8. Composition de revêtement selon la revendication 1, ledit monomère contenant un groupe acide carboxylique comprend un ou plusieurs acides carboxyliques choisis dans le groupe constitué par l'acide (méth)acrylique, l'acide crotonique, l'acide oléique, l'acide cinnamique, l'acide glutaconique, l'acide muconique, l'acide undécylénique, l'acide itaconique, l'acide crotonique, l'acide fumarique, l'acide maléique, et une combinaison de ceux-ci.

9. Composition de revêtement selon la revendication 4, dans laquelle ledit monomère (méth)acrylate non fonctionnel est choisi dans le groupe constitué par le (méth)acrylate de méthyle, le (méth)acrylate d'éthyle, le (méth)acrylate de propyle, le (méth)acrylate de butyle, le (méth)acrylate de pentyle, le (méth)acrylate d'hexyle, le (méth)acrylate d'octyle, le (méth)acrylate de nonyle, le (méth)acrylate d'isodécyle, le (méth)acrylate de lauryle, le (méth)acrylate d'isobutyle, le (méth)acrylate de t-butyle, le (méth)acrylate de 2-éthylhexyle, le (méth)acrylate de cyclohexyle, le (méth)acrylate de méthylcyclohexyle, le (méth)acrylate de triméthylcyclohexyle, le (méth)acrylate de butyl tertiaire-cyclohexyle, le (méth)acrylate d'isobornyle, et une combinaison de ceux-ci.

10. Composition de revêtement selon la revendication 1 ou 4, dans laquelle ledit mélange de monomères comprend du styrène.

11. Composition de revêtement selon la revendication 1, dans laquelle ledit constituant de réticulation comprend un polyisocyanate, de la mélamine ou une combinaison de ceux-ci.

12. Composition de revêtement selon la revendication 11, dans laquelle un rapport d'équivalents des fonctionnalités isocyanates sur ledit polyisocyanate par équivalent de tous les groupes fonctionnels présents dans le constituant de réticulation va de 0,5/1 à 3,0/1.

13. Composition de revêtement selon la revendication 11, comprenant 0,1 pour cent en poids à 40 pour cent en poids de ladite mélamine, dans laquelle lesdits pourcentages sont sur la base du poids total des substances solides de la composition.

14. Composition de revêtement selon la revendication 12, comprenant en outre une quantité catalytiquement active d'un ou plusieurs catalyseurs.

15. Composition de revêtement selon la revendication 13, comprenant en outre une quantité catalytiquement active d'un ou plusieurs catalyseurs acides.

16. Composition de revêtement selon la revendication 1, dans laquelle le constituant réticulable comprend un polymère acrylique, un polyester ou une combinaison de ceux-ci.

17. Composition de revêtement selon la revendication 1, dans laquelle ledit constituant réticulable comprend en outre un ou plusieurs oligomères réactifs.

18. Composition de revêtement selon la revendication 1, dans laquelle le constituant réticulable comprend en outre une résine modifiante.

19. Composition de revêtement selon la revendication 1, comprenant en outre des pigments, des pigments à effet spécial et une combinaison de ceux-ci.

20. Composition de revêtement selon la revendication 1, formulée sous la forme d'une composition de revêtement en deux récipients.

21. Composition de revêtement selon la revendication 1 ou 20, formulée sous la forme d'une composition OEM automobile.

22. Composition de revêtement selon la revendication 1 ou 20, formulée sous la forme d'une composition de retouche automobile.

23. Composition de revêtement selon la revendication 1 ou 20, formulée sous la forme d'une composition de revêtement pauvre en composé organique volatil comprenant un solvant allant de 0,1 kilogramme (1,0 livre par gallon) à 0,72 kilogramme (6,0 livres par gallon) par litre de ladite composition.

24. Composition de revêtement selon la revendication 1, dans laquelle ledit constituant réticulable comprend 2 pour cent en poids à 25 pour cent en poids d'un ou plusieurs copolymères acryliques à fonction acide, tous les pourcentages étant sur la base du poids total du constituant réticulable.

25. Procédé pour produire un revêtement sur un substrat, comprenant:
(a) le mélange d'un constituant réticulable d'une composition de revêtement avec un constituant de réticulation de ladite composition de revêtement pour former un mélange en pot, ledit constituant réticulable comprenant un copolymère acrylique à fonction acide polymérisé à partir d'un mélange de monomères comprenant 2 pour cent en poids à 12 pour cent en poids d'un monomère contenant un groupe acide carboxylique sur la base du poids total du copolymère acrylique à fonction acide, et 0,2 pour cent en poids à 2 pour cent en poids de silice amorphe sur la base du poids total du constituant réticulable;
(b) l'application d'une couche dudit mélange en pot sur ledit substrat; et
(c) le durcissement de ladite couche en ledit revêtement sur ledit substrat.

26. Procédé selon la revendication 25, dans lequel ladite étape de durcissement se déroule sous des conditions ambiantes, à des températures élevées, ou sous des conditions ambiantes suivies par des températures élevées.

27. Procédé selon la revendication 25, dans lequel ledit substrat est une carrosserie automobile.
